## Europäisches Patentamt
## European Patent Office
## Office européen des brevets

(19)

(11) Veröffentlichungsnummer: **0 192 195**
**B1**

(12)

# EUROPÄISCHE PATENTSCHRIFT

(45) Veröffentlichungstag der Patentschrift:
**11.05.88**

(51) Int. Cl.⁴: **B 01 D 53/14, C 01 B 17/60**

(21) Anmeldenummer: **86101858.8**

(22) Anmeldetag: **13.02.86**

(54) **Verfahren und Vorrichtung zum Abtrennen unerwünschter Komponenten aus Gasgemischen.**

(30) Priorität: **18.02.85 DE 3505590**

(43) Veröffentlichungstag der Anmeldung:
**27.08.86 Patentblatt 86/35**

(45) Bekanntmachung des Hinweises auf die Patenterteilung:
**11.05.88 Patentblatt 88/19**

(84) Benannte Vertragsstaaten:
**AT BE DE FR GB NL**

(56) Entgegenhaltungen:
**FR - A - 2 247 423**
**US - A - 3 538 681**
**US - A - 3 553 936**

(73) Patentinhaber: **Linde Aktiengesellschaft,
Abraham-Lincoln-Strasse 21, D-6200 Wiesbaden (DE)**

(72) Erfinder: **Becker, Hans, Dr.Ing., Zwengauer Weg 9,
D-8000 München 71 (DE)**

(74) Vertreter: **Schaefer, Gerhard, Dr., Linde
Aktiengesellschaft Zentrale Patentabteilung,
D-8023 Höllriegelskreuth (DE)**

**Beschreibung**

Die Erfindung betrifft ein Verfahren zum Abtrennen unerwünschter Komponenten aus Gasgemischen durch Wäsche in einer ersten Waschkolonne mit einem physikalisch wirkenden Absorptionsmittel, das nach Aufnahme der unerwünschten Komponenten in einer Regenerierkolonne regeneriert und wiederverwendet wird, wobei die bei der Regenerierung anfallenden unerwünschten Komponenten und ein ebenfalls anfallender Inertgasanteil in einem weiteren Verfahrensschritt aufgetrennt, die unerwünschten Komponenten abgezogen und die noch unerwünschte Komponenten enthaltenden Inertgase zur Wäsche zurückgeführt werden, sowie eine Vorrichtung zur Durchführung des Verfahrens.

Beispielsweise bei der Abtrennung von $SO_2$ als unerwünschter bzw. zu gewinnender Komponente aus einem Gas, insbesondere einem Rauchgas, werden weitere Inertgaskomponenten, wie $CO_2$ und Spuren von $N_2$ und $O_2$, teilweise mit aus dem Gas ausgewaschen. Das aus dem Rauchgas abgetrennte $SO_2$ soll in vielen Fällen verflüssigt werden, um den Transport z.B. zu weiteren Verarbeitungsstätten, wie Schwefelsäurefabriken, zu erleichtern. Dies ist nur möglich, wenn das aus dem Absorptionsmittel in einer Regenerierkolonne abgetrennte Restgas, das hauptsächlich aus $SO_2$ und mitausgewaschenem Inertgas, in dem speziellen Fall $CO_2$, besteht, weiter aufgetrennt wird. Diese weitere Auftrennung oder Feinreinigung kann beispielsweise rektifikatorisch oder adsorptiv erfolgen, wobei einerseits reines $SO_2$ abgezogen werden kann und andererseits noch $SO_2$-haltiges Inertgas erhalten wird.

Um bei einer rektifikatorischen Auftrennung der Inertgase und des $SO_2$ die Kopftemperatur der Rektifizierkolonne bei etwa Umgebungsdruck nicht zu niedrig (unter −20° C) zu halten, ist es unumgänglich, in der Inertgasrückführung noch $SO_2$, beispielsweise 50% zu belassen. Es wurde daher bereits versucht, nach Anwärmen des beladenen Absorptionsmittels dieses vor Einleiten in eine Regenerierkolonne in einem Abscheider auszugasen, um möglichst viel Inertgase direkt zurückzuführen. Dennoch kann z.B. bei Kraftwerksabgasen die mit der Inertgasrückführung verbundene $SO_2$-Rückführung bis zu 50% des im Rauchgas enthaltenen $SO_2$ betragen. Dabei sind die Kosten für einen derartigen Abscheider sehr hoch und dessen Wirksamkeit überdies gering, da nur etwa ⅓ der mitausgewaschenen Inertgase abgetrennt werden kann.

Der vorliegenden Erfindung liegt daher die Aufgabe zugrunde, ein Verfahren der eingangs genannten Art derart zu verbessern, dass bei einer Inertgasrückführung auf kostengünstige Weise geringere Mengen an unerwünschten Komponenten wieder zurück zur Waschkolonne gefahren werden.

Diese Aufgabe wird erfindungsgemäss dadurch gelöst, dass die Inertgase in einer zweiten Waschkolonne mit einem physikalisch wirkenden Absorptionsmittel von den unerwünschten Komponenten zumindest teilweise befreit und dann zur ersten Waschkolonne zurückgeführt werden.

Mit dem erfindungsgemässen Verfahren wird somit nicht die Menge der in die Regenerierkolonne geführten Inertgase durch beispielsweise Ausgasen in einem Abscheider möglichst klein gehalten, sondern aus dem rückgeführten Inertgasstrom die noch vorhandene Menge unerwünschter Komponenten zumindest teilweise, insbesondere zu 50 bis 99% absorptiv abgetrennt. Hierdurch ergibt sich als Vorteil insbesondere, dass der sehr teure grosse Abscheider durch eine wesentlich billigere kleine Waschkolonne ersetzt wird.

Gemäss einer besonders vorteilhaften Ausführungsform des Erfindungsgedankens wird dabei ein Teilstrom des mit den unerwünschten Komponenten beladenen Absorptionsmittels der ersten Waschkolonne abgezweigt und in der zweiten Waschkolonne zur weiteren Entfernung unerwünschter Komponenten verwendet. Bekanntermassen hängt bei physikalischen Absorptionsmitteln die Gasaufnahmefähigkeit insbesondere vom Partialdruck der aufzunehmenden Komponente ab. Bei beispielsweise $SO_2$ ist der Partialdruck in der ersten Waschkolonne wesentlich geringer als in der zweiten, so dass das mit $SO_2$ beladene Absorptionsmittel der ersten Waschkolonne noch ausreichend $SO_2$ in der zweiten Waschkolonne aufnehmen kann. Mit dieser erfindungsgemässen Verfahrensführung wird eine Verkleinerung der insgesamt umlaufenden Waschmittelmenge erreicht und damit eine Verringerung sowohl der Betriebs- als auch der Investitionskosten.

Insbesondere werden dabei 0,1 bis 10%, vorzugsweise 1 bis 3% des beladenen Absorptionsmittels der ersten Waschkolonne abgezweigt.

In einer weiteren vorteilhaften Ausführungsform des erfindungsgemässen Verfahrens wird vorgeschlagen, das beladene Absorptionsmittel der zweiten Waschkolonne zusammen mit dem beladenen Absorptionsmittel der ersten Waschkolonne zu regenerieren. Damit wird eine zusätzliche Regenerierkolonne eingespart, was sich in kostengünstiger Weise auf das Gesamtverfahren auswirkt.

Die Erfindung betrifft überdies eine Vorrichtung zur Durchführung des Verfahrens mit einer ersten Waschkolonne, einer mit dem Sumpf der Waschkolonne verbundenen Regenerierkolonne sowie einer mit dem Kopf der Regenerierkolonne verbundenen Feinreinigungseinrichtung. Diese Vorrichtung ist dadurch gekennzeichnet, dass die Feinreinigungseinrichtung mit einer zweiten Waschkolonne verbunden ist. Gemäss einer zweckmässigen Ausgestaltungsform ist hierbei der Sumpf der ersten Waschkolonne mit dem oberen Bereich der zweiten Waschkolonne verbunden. Weiterhin ist vorteilhaft der Sumpf der zweiten Waschkolonne mit der Regenerierkolonne verbunden.

Das erfindungsgemässe Verfahren und die zugehörige Vorrichtung sind bei allen Gaswäschen mit Inertgasrückführung einsetzbar, und zwar insbesondere dann, wenn die aus dem Gas ausgewaschene Komponente in reiner Form weiterverarbeitet, beispielsweise verflüssigt werden soll, wobei gemeinsam mit der ausgewaschenen Komponente vorhandene Inertgase stören. Insbesondere ist das Verfahren einsetzbar bei Rauchgaswäschen mit relativ niedrigem $SO_2$-Gehalt von z.B. etwa 0,01 bis 10 mol% im Rauchgas, wie z.B. aus Steinkohlekraftwerken. Als Absorptionsmittel kommen alle physikalischen Lösungsmittel in Betracht, wie beispielsweise und nicht einschränkend Methanol, Polyethylenglykolether, N-Methylpyrrolidon (NMP), Dimethylformamid (DMF) und andere.

Im folgenden wird das erfindungsgemässe Verfahren anhand eines schematisch dargestellten Ausführungsbeispiels näher erläutert.

Über eine Leitung 1 werden 500 000 m³/h i.N. Rauchgas eines Kraftwerkes mit einer Temperatur von ca. 50° C und einem Druck von 1 bar dem unteren Teil einer Waschkolonne 2 zugeführt. Das Rohgas enthält bis zu 3500 mg/m³ i.N. an $SO_2$, ca. 1500 mg/m³ i.N. an $NO_x$, ca. 300 mg/m³ i.N. an HCl, ca. 40 mg/m³ i.N. an HF sowie etwa 150 mg/m³ i.N. an Staub.

Das Rohgas wird mit über Leitung 3 herangeführtem Kühlwasser (ca. 1000 m³/h, Temperatur 4° C) in dem unteren nur schematisch dargestellten Kolonnenabschnitt gekühlt und vorgewaschen. Über Leitung 4 wird das Staub, gegebenenfalls $SO_3$, HF und/oder HCl enthaltende Wasser abgezogen.

In dem eigentlichen Waschabschnitt der Kolonne 2 wird das aufsteigende Gas nunmehr im Gegenstrom zu über Leitung 5 herangeführtem Absorptionsmittel, beispielsweise 450 m³/h Tetraethylenglykoldimethylether von $SO_2$ befreit und verlässt die Waschkolonne 2 über Kopf über Leitung 6 mit einem $SO_2$-Gehalt von ca. 340 mg/m³ i.N. bei 5° C und 1 bar.

Das mit ca. 600 m³/h i.N. $SO_2$ sowie 300 m³/h i.N. $CO_2$ beladene Absorptionsmittel wird über Leitung 7 aus der Kolonne 2 mit einer Temperatur von ca. 9° C abgezogen und mittels einer Pumpe 8 auf etwa 3 bar gebracht. Die Hauptmenge des beladenen Absorptionsmittels wird sodann nach Anwärmung in einem Wärmetauscher 9 gegen abzukühlendes regeneriertes Absorptionsmittel mit einer Temperatur von ca. 95° C in die Mitte einer bei etwa 0,5 bar betriebenen Regenerierkolonne 10 geführt.

Die Regenerierkolonne 10 ist mit einer Sumpfheizung 11 und einem Kopfkühler 12 ausgestattet. In der Regenerierkolonne werden $SO_2$ sowie das mitausgewaschene $CO_2$ aus dem Absorptionsmittel abgestrippt und verlassen den Kopf der Kolonne 10 über Leitung 13. Das regenerierte Absorptionsmittel zieht vom Sumpf der Kolonne 10 über Leitung 14 mit einer Temperatur von ca. 100° C ab, wird im Wärmetauscher 9 auf 15° C und gegen Kühlmedium 15 auf 4° C abgekühlt und über Leitung 5 wieder auf die Waschkolonne 2 aufgegeben. Nach Verdichtung und Nachkühlung in 16 werden ca. 1270 m³/h i.N. an Restgas mit einer Temperatur von z.B. 30° C, einem Druck von etwa 1,5 bar und folgender Zusammensetzung erhalten:

71% $SO_2$
24% $CO_2$
2% $N_2$
3% $H_2O$

Dieses Restgas wird in 17 getrocknet und anschliessend einer Rektifizierkolonne 18 zugeführt. Aus der Rektifizierkolonne 18 werden vom Sumpf über Leitung 19 ca. 1,6 t/h flüssiges $SO_2$ als Produkt mit einer Temperatur von −3° C und vom Kopf über Leitung 20 650 m³/h i.N. Inertgase bestehend aus 49% $SO_2$, 47% $CO_2$ und 4% $N_2$ mit einer Temperatur von −20° C abgezogen.

Da die Inertgase noch etwa 50% $SO_2$ enthalten, werden sie erfindungsgemäss einer zweiten Waschkolonne 21 unten zugeführt und im Gegenstrom zu über Leitung 22 herangeführtem Absorptionsmittel (5 m³/h) bei einem Druck von 1,2 bar und 9° C gewaschen.

Das Absorptionsmittel aus Leitung 22 ist mit $SO_2$ aus der ersten Waschkolonne vorbeladen, kann aber noch 290 m³/h i.N. $SO_2$ aus dem Inertgas aufnehmen. Das beladene Absorptionsmittel aus der zweiten Waschkolonne wird über Leitung 23 mit einer Temperatur von ca. 45° C abgezogen und zusammen mit der Hauptmenge des Absorptionsmittels aus der ersten Waschkolonne der Regenerierkolonne 10 zugeführt.

Die nunmehr nahezu $SO_2$-freien Inertgase (Restgehalt ca. 6% $SO_2$) ziehen über Leitung 24 vom Kopf der zweiten Waschkolonne 21 ab, werden in 25 auf 1 bar entspannt und zurück zur Waschkolonne 2 geführt.

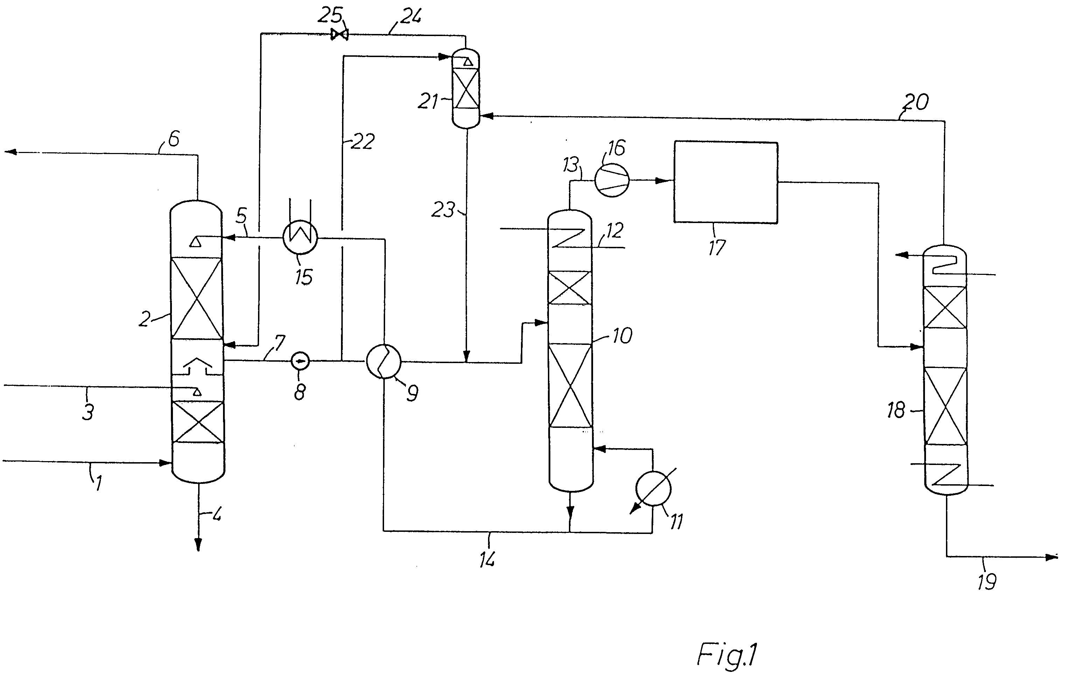

## Patentansprüche

1. Verfahren zum Abtrennen unerwünschter Komponenten aus Gasgemischen durch Wäsche in einer ersten Waschkolonne mit einem physikalisch wirkenden Absorptionsmittel, das nach Aufnahme der unerwünschten Komponenten in einer Regenerierkolonne regeneriert und wiederverwendet wird, wobei die bei der Regenerierung anfallenden unerwünschten Komponenten und ein ebenfalls anfallender Inertgasanteil in einem weiteren Verfahrensschritt aufgetrennt, die unerwünschten Komponenten abgezogen und die noch unerwünschte Komponenten enthaltenden Inertgase zur Wäsche zurückgeführt werden, dadurch gekennzeichnet, dass die Inertgase in einer zweiten Waschkolonne mit einem physikalisch wirkenden Absorptionsmittel von den unerwünschten Komponenten zumindest teilweise befreit und dann zur ersten Waschkolonne zurückgeführt werden.

2. Verfahren nach Anspruch 1, dadurch gekennzeichnet, dass ein Teilstrom des mit den unerwünschten Komponenten beladenen Absorptionsmittels der ersten Waschkolonne abgezweigt und in der zweiten Waschkolonne zur weiteren Entfernung unerwünschter Komponenten verwendet wird.

3. Verfahren nach Anspruch 2, dadurch gekennzeichnet, dass 0,1 bis 10%, vorzugsweise 1 bis 3% des beladenen Absorptionsmittels der ersten Waschkolonne abgezweigt werden.

4. Verfahren nach einem der Ansprüche 1 bis 3, dadurch gekennzeichnet, dass das beladene Absorptionsmittel der zweiten Waschkolonne zusammen mit dem beladenen Absorptionsmittel der ersten Waschkolonne regeneriert wird.

5. Vorrichtung zur Durchführung des Verfahrens nach einem der Ansprüche 1 bis 4 mit einer ersten Waschkolonne, einer mit dem Sumpf der Waschkolonne verbundenen Regenerierkolonne sowie einer mit dem Kopf der Regenerierkolonne verbundenen Feinreinigungseinrichtung, dadurch gekennzeichnet, dass die Feinreinigungseinrichtung mit einer zweiten Waschkolonne verbunden ist.

6. Vorrichtung nach Anspruch 5, dadurch gekennzeichnet, dass der Sumpf der ersten Waschkolonne mit dem oberen Bereich der zweiten Waschkolonne verbunden ist.

7. Vorrichtung nach Anspruch 5 oder 6, dadurch gekennzeichnet, dass der Sumpf der zweiten Waschkolonne mit der Regenerierkolonne verbunden ist.

## Claims

1. Process for separating undesired components from gas mixtures by washing in a first washing column with a physically acting absorbent, which, after absorbing the undesired components, is regenerated in a regenerating column and reused, the undesired components occurring in the course of the regeneration and an inert gas component which also occurs being separated in a further process step, the undesired components being drawn off and the inert gases still containing undesired components being fed back to the washing, characterised in that the inert gases are at least partially freed from the undesired components in a second washing column with a physically acting absorbent, and are then fed back to the first washing column.

2. Process according to Claim 1, characterised in that a part stream of the absorbent of the first washing column, charged with the undesired components, is branched off and is used in the second washing column for the further removal of undesired components.

3. Process according to Claim 2, characterised in that 0.1 to 10%, preferably 1 to 3%, of the charged absorbent of the first washing column are branched off.

4. Process according to one of Claims 1 to 3, characterised in that the charged absorbent of the second washing column is regenerated together with the charged absorbent of the first washing column.

5. Apparatus for carrying out the process according to one of Claims 1 to 4, having a first washing column, a regenerating column connected to the sump of the washing column, and a fine purification device connected to the head of the regenerating column, characterised in that the fine purification device is connected to a second washing column.

6. Apparatus according to Claim 5, characterised in that the sump of the first washing column is connected to the upper region of the second washing column.

7. Apparatus according to Claim 5 or 6, characterised in that the sump of the second washing column is connected to the regenerating column.

## Revendications

1. Procédé de séparation de composants indésirables de mélanges gazeux par lavage dans une première colonne de lavage à l'aide d'un milieu absorbant à action physique qui, après absorption des composants indésirables, est régénéré dans une colonne de régénération et ensuite réutilisé, cependant que les composants indésirables recueillis pendant la régénération ainsi qu'une quantité de gaz inertes également recueillis sont séparés dans une étape suivante, que les composants indésirables sont éliminés et que les gaz inertes contenant encore des composants indésirables sont recyclés vers le lavage, caractérisé en ce que les gaz inertes sont débarrassés au moins partiellement des composants indésirables dans une seconde colonne de lavage, à l'aide d'un milieu absorbant à effet physique, pour être ensuite recyclés vers la première colonne de lavage.

2. Procédé selon la revendication 1, caractérisé en ce qu'un courant partiel du milieu absorbant chargé de composants indésirables est dérivé à partir de la première colonne de lavage et utilisé dans la seconde colonne de lavage pour éliminer une quantité supplémentaire de composants indésirables.

3. Procédé selon la revendication 2, caractérisé en ce qu'on dérive 0,1 à 10%, de préférence 1 à 3%, du milieu absorbant chargé à partir de la première colonne de lavage.

4. Procédé selon une des revendications 1 à 3, caractérisé en ce qu'on régénère ensemble le milieu absorbant chargé de la seconde colonne de lavage et le milieu absorbant chargé de la première colonne de lavage.

5. Dispositif pour la mise en œuvre du procédé selon une des revendications 1 à 4, comprenant une première colonne de lavage, une colonne de régénération reliée à la cuve de ladite colonne de lavage et une installation de purification fine reliée à la tête de la colonne de régénération, caractérisé en ce que l'installation de purification fine est reliée à une seconde colonne de lavage.

6. Dispositif selon la revendication 5, caractérisé en ce que la cuve de la première colonne de lavage est reliée à la partie supérieure de la seconde colonne de lavage.

7. Dispositif selon la revendication 5 ou 6, caractérisé en ce que la cuve de la seconde colonne de lavage est reliée à la colonne de régénération.

Fig.1

0 192 195